# FASCICULE DE BREVET EUROPEEN

(11) **EP 3 175 136 B1**
(45) Date de publication et mention de la délivrance du brevet: **12.02.2020**
(21) Numéro de dépôt: 15753724.2
(22) Date de dépôt: 20.07.2015
(51) Int. Cl.: F16D 65/18, B60T 13/74, F16H 25/22, F16D 65/16, F16D 121/24, F16D 125/40, F16D 125/48

(54) **ACTIONNEUR DE FREINAGE POUR VÉHICULE**
FAHRZEUGBREMSENBETÄTIGER
VEHICLE BRAKE ACTUATOR

(30) Priorité: 30.07.2014 FR 1457398
(43) Date de publication de la demande: 07.06.2017
(73) Titulaire: Chassis Brakes International B.V., 5656 AG Eindhoven (NL)
(72) Inventeur: PASQUET, Thierry, F-94700 Vincennes (FR); TELEGA, Philippe, F-60128 Plailly (FR)
(74) Mandataire: Potdevin, Emmanuel Eric
(86) Numéro de dépôt international: PCT/FR2015/051989
(87) Numéro de publication internationale: WO 2016/016541

(56) Documents cités:
- WO-A1-2007/036357
- DE-A1- 19 543 098
- DE-A1- 19 807 328
- FR-A1- 2 839 127
- FR-A1- 2 951 514
- JP-A- H08 296 674
- JP-A- 2005 133 863

## Description

L'invention se rapporte au domaine des actionneurs de freinage pour véhicule, et plus spécifiquement au domaine des actionneurs de freinage de type électromécanique.

On connait des véhicules qui utilisent des dispositifs de freinage hydraulique. De tels dispositifs mettent en œuvre des actionneurs hydrauliques comportant notamment un piston apte à pousser une plaquette de frein contre un disque relié rigidement à la roue du véhicule.

Toutefois, depuis quelques années, on assiste à l'apparition de dispositifs de freinage électromécaniques qui sont actionnés électriquement plutôt que hydrauliquement. Ces dispositifs de freinage sont munis d'un actionneur électromécanique qui présente notamment l'avantage de réduire les coûts de fabrication du véhicule mais aussi son coût de maintenance en supprimant l'entretien d'un circuit hydraulique.

Le document DE 198 07 328 A1 décrit un dispositif de freinage électromécanique mettant en œuvre un actionneur électromécanique de freinage comprenant une vis, un carter interne taraudé en prise avec la vis au moyen d'une liaison irréversible, un moteur électrique de commande d'un mouvement de la vis par rapport au carter interne de sorte que ce mouvement actionne un élément de freinage, des rouleaux internes filetés, les rouleaux internes étant chacun en prise d'une part avec la vis et d'autre part avec le carter interne au moyen d'au moins un filet.

On connaît notamment de la demande EP-1 359 338, un dispositif de freinage électromécanique mettant en œuvre un actionneur électromécanique de freinage pourvu d'une vis à billes couplée à un moteur électrique. La vis à billes est adaptée pour transformer le mouvement de rotation du moteur électrique en un mouvement linéaire pour pousser la plaquette contre le disque de frein. La vis à billes comporte une vis, un carter et des billes destinées à réduire les frottements entre la vis et le carter.

L'inconvénient majeur de l'actionneur de l'art antérieur est lié à la présence de la vis à billes dont une des caractéristiques est la réversibilité. On entend par réversibilité le fait qu'un effort axial appliqué sur la vis génère une rotation du carter, et réciproquement, qu'un effort axial appliqué sur le carter génère une rotation de la vis. On comprend que la réversibilité constitue un inconvénient sérieux dans la mesure où un déplacement imprévu de la vis ou du carter selon un mouvement de translation pourrait affecter la fiabilité du freinage et ainsi compromettre la sécurité des passagers du véhicule.

Par ailleurs, pour des questions de coût, l'utilisation d'un actionneur de freinage électromécanique mettant en œuvre une vis à billes n'est pas satisfaisante.

A cet effet, l'invention a pour objet un actionneur de freinage de véhicule comportant :
- une vis,
- un carter interne taraudé en prise avec la vis au moyen d'une liaison irréversible,
- un moteur électrique de commande d'un mouvement de la vis par rapport au carter interne ou du carter interne par rapport à la vis de sorte que ce mouvement actionne un élément de freinage,

- des rouleaux internes filetés, les rouleaux internes étant chacun en prise d'une part avec la vis et d'autre part avec le carter interne au moyen d'au moins un filet,
- un carter externe taraudé, et
- des rouleaux externes en prise chacun d'une part avec le carter interne et d'autre part avec le carter externe, les rouleaux externes étant munis d'au moins un filet orienté en sens inverse d'un filet du carter interne et dans le même sens qu'un filet du carter externe.

Ainsi, un actionneur selon l'invention permet de supprimer les inconvénients précités.

On comprend notamment qu'un tel actionneur de freinage présente l'avantage que la vis et le carter interne ne peuvent être déplacés l'un par rapport à l'autre que par le mouvement de rotation du moteur électrique. Ainsi, cet actionneur évite tout déplacement inopiné de la vis par rapport au carter interne. Ceci est particulièrement intéressant lorsque l'actionneur est utilisé dans une configuration de type frein de parking car cela permet d'améliorer la fiabilité du freinage d'un véhicule. Par ailleurs, un tel actionneur de freinage présente un coût particulièrement faible en mettant en œuvre des éléments peu onéreux et bien plus faciles à fabriquer que les éléments d'un actionneur munis d'une vis à billes notamment.

De plus, pour ce type d'actionneur, dit à « double étage de réduction », l'orientation dans le même sens des filets des rouleaux externes en prise avec ceux du carter externe offre une capacité de réduction qui est améliorée.

En outre, comme l'actionneur comporte des rouleaux internes filetés, les rouleaux étant chacun en prise d'une part avec la vis et d'autre part avec le carter interne au moyen d'au moins un filet, l'actionneur sert de réducteur et l'utilisation d'un moteur électrique tournant à des vitesses de rotation élevées est rendue possible. Cela permet notamment d'utiliser un moteur dont le coût est faible.

De préférence, la vis et le carter interne comportent chacun plusieurs filets, de préférence trois filets.

Ainsi, la capacité de réduction de l'actionneur est encore augmentée.

Par exemple, le filet de chaque rouleau est orienté en sens inverse d'un filet de la vis et dans le même sens qu'un filet du carter interne.

Ainsi, la capacité de réduction peut être augmentée jusqu'à un rapport de 1/180.

De préférence encore, les rouleaux sont en prise directe avec la vis et le carter interne.

On peut prévoir que le carter interne forme un piston agencé pour actionner l'élément de freinage.

Ainsi, il n'y a pas besoin d'utiliser une pièce supplémentaire destinée à se déplacer en translation pour actionner l'élément de freinage.

Avantageusement, la vis forme un piston agencé pour actionner l'élément de freinage.

Là aussi, il n'y a pas besoin de prévoir une pièce additionnelle qui serait vouée à actionner l'élément mobile de freinage.

L'invention a également pour objet un dispositif de freinage de véhicule comportant l'actionneur tel que précité qui est configuré pour actionner un frein à disque, de préférence à étrier flottant.

L'invention a encore pour objet un véhicule muni d'un dispositif de freinage dans lequel l'actionneur est configuré pour actionner un frein de service ou un frein de parking.

Ainsi, un tel actionneur peut être envisagé dans différentes configurations de dispositifs de freinage.

Egalement, on prévoit que le dispositif comporte un actionneur dans lequel la vis et les carters sont fabriqués en un matériau polymère chargé d'un renfort.

Nous allons maintenant décrire cinq modes de réalisation de l'invention à titre d'exemples non limitatifs, en référence aux dessins annexés, sur lesquels :
- la figure 1 est une vue en perspective d'un actionneur formant un premier mode de réalisation de l'invention, dans lequel le carter est représenté en coupe ;
- la figure 2 est une vue en coupe d'un actionneur formant un second mode de réalisation de l'invention ;
- la figure 3 est une vue en coupe d'un actionneur de freinage formant un troisième mode de réalisation de l'invention ;
- la figure 4 est une vue en perspective d'un actionneur de freinage formant un quatrième mode de réalisation de l'invention et ;
- la figure 5 est une vue en perspective d'un actionneur de freinage formant un cinquième mode de réalisation de l'invention.

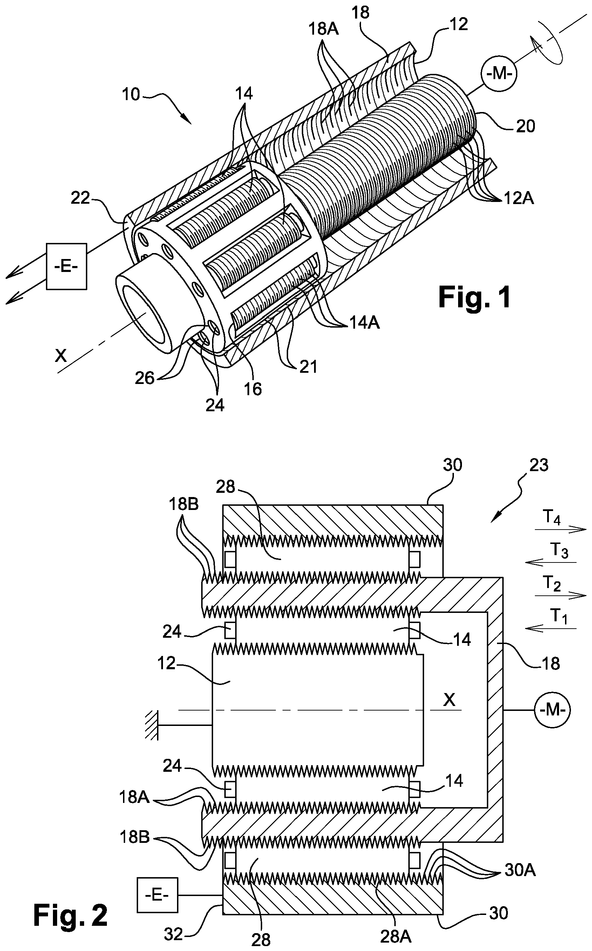

En référence à la figure 1, dans l'actionneur de freinage selon l'invention, le réducteur 10 comporte une vis interne 12, des rouleaux 14 agencés autour de la vis, une cage 16 de maintien des rouleaux et un carter 18.

La vis 12 présente trois filets 12A orientés selon un même premier sens. Une extrémité 20 de la vis 12 est destinée à être rigidement fixée à un moyen d'entrainement en rotation, tel qu'un moteur électrique M de l'actionneur par exemple. Ainsi, le réducteur est configuré pour être commandé électriquement. L'autre extrémité de la vis comporte un bord libre, lisse et creux.

Les rouleaux 14 sont filetés et ont un axe longitudinal parallèle à l'axe X de la vis. Ils présentent chacun un unique filet 14A qui vient en prise directe avec les filets 12A de la vis. Le filet 14A de chaque rouleau 14 est orienté selon un sens inverse des filets 12A de la vis 12.

La cage 16 de maintien des rouleaux 14 présente une forme cylindrique coaxiale à la vis 12 et s'étendant sur une portion réduite de la longueur de la vis. Cette cage 16 comporte des logements longitudinaux 21 configurés pour accueillir les rouleaux à intervalles réguliers autour de la vis. A cet effet, les logements 21 comportent des alésages 26 débouchant aux extrémités de la cage. A leurs extrémités, les rouleaux sont munis de pions de positionnement 24 qui viennent se loger dans les alésages 26 des logements 21. Ainsi, chaque rouleau 14 est maintenu par ses extrémités dans un logement 21 de la cage 16. Dans cet exemple, les rouleaux sont au nombre de 10 et la cage 16 de maintien des rouleaux comporte dix logements, mais pourrait bien sûr en comporter un nombre différent, en fonction du nombre de rouleaux mis en œuvre. Ainsi, chaque rouleau 14 est monté mobile à rotation dans son logement 21.

Le carter 18 forme une chemise cylindrique entourant la cage 16 et agencée coaxialement avec la vis 12. Le carter 18 comporte une paroi interne pourvue d'un taraudage muni de six filets 18A orientés dans le même sens que celui des filets 14A des rouleaux 14. Le carter 18 vient en prise directe avec les rouleaux. Une extrémité 22 du carter 18 est configurée pour être fixée rigidement à un élément E destiné à être déplacé en translation et ainsi guidé à coulissement par rapport au moteur.

Ainsi, les rouleaux 14 sont chacun en prise directe d'une part avec la vis 12 et d'autre part avec le carter 18 au moyen d'au moins un filet 14A orienté en sens inverse d'un filet 12A de la vis et dans le même sens qu'un filet 18A du carter 18.

Nous allons maintenant présenter le fonctionnement du réducteur 10. On suppose que le réducteur 10 est entraîné en rotation par un arbre d'un moteur électrique M de type « brushless » apte à tourner dans les deux sens de rotation. Lorsque le moteur électrique M est actionné selon un premier sens de rotation, la vis 12 entraîne les rouleaux 14 et la cage 16 en rotation autour de l'axe X. Comme les rouleaux 14 sont en prise avec le carter 18, leur mouvement de rotation génère un mouvement de translation du carter 18 selon l'axe X de la vis.

En d'autres termes, il existe un déplacement axial selon l'axe X entre la vis 12 et les rouleaux 14, entre les rouleaux 14 et le carter 18, et entre le carter 14 et la vis 12. Ainsi, le réducteur permet de déplacer l'élément E selon un mouvement de translation à partir d'un mouvement de rotation du moteur M. L'élément E est par exemple relié à une plaquette de frein destinée à venir en contact avec un disque d'un frein à disque.

Le mouvement de translation conjoint du carter et de l'élément E est ainsi fortement réduit car il résulte d'une différence du nombre de filets 12A, 14A, 18A entre, d'une part, la vis et les rouleaux, d'autre part, les rouleaux et le carter, d'une différence de diamètre entre la vis et le carter, mais également du sens inversé des filets de la vis et des rouleaux.

Dans le cas d'une rotation du moteur M dans le sens inverse, on comprend que les mouvements de rotation et de translation décrits ci-dessus sont inversés, générant ainsi un mouvement de translation de l'élément E dans le sens inverse.

On va maintenant décrire ci-dessous d'autres modes de réalisation de l'invention, en se référant aux figures 2 à 5 sur lesquelles les éléments analogues à ceux de la figure 1 sont désignés par des références identiques.

En référence à la figure 2, on a représenté un second mode de réalisation d'un réducteur 23, dit réducteur « à double étage de réduction ». Ce type de réducteur 23, qui est adapté pour être utilisé comme actionneur de freinage, comporte des éléments sensiblement identiques à ceux précédemment présentés, à savoir, une vis 12 présentant trois filets 12A, des rouleaux 14 munis d'un filet 14A orienté dans le sens inverse des filets de la vis et un carter 18 muni de six filets internes 18A orientés dans le même sens que les filets des rouleaux. Dans ce mode de réalisation, les rouleaux sont appelés rouleaux internes 14 et le carter est dit carter interne 18. Ces éléments sont agencés les uns par rapport aux autres comme dans le mode de réalisation précédent, à la différence qu'ici l'arbre du moteur M est fixé au carter interne 18 au lieu d'être fixé à la vis 12. Egalement de manière différente au mode de réalisation précédemment décrit, la vis 12 est rigidement fixée à un bâti accueillant le réducteur et le moteur M est monté coulissant selon l'axe X par rapport au bâti.

Le réducteur comporte également des éléments supplémentaires destinés à augmenter la capacité de réduction d'un tel réducteur. En l'occurrence, ces éléments supplémentaires sont des rouleaux externes filetés 28 et un carter externe 30.

Les rouleaux internes 14 sont donc agencés autour de la vis 12 tandis que les rouleaux externes 28 sont agencés périphériquement au carter interne 18 et sont, tout comme les rouleaux internes 14, chacun munis d'un seul filet 28A. Les rouleaux externes 28 sont logés dans une cage (non représentée) de forme sensiblement identique à celle précédemment décrite dont le diamètre est adapté pour accueillir le carter interne 18 et les rouleaux externes 28.

Le carter externe 30 entoure la cage 26 et a une forme cylindrique coaxiale avec la vis 12. Le carter externe 30 comporte un taraudage pourvu de six filets 30A sur sa paroi interne. Un élément E destiné à être déplacé en translation est rigidement fixé à une extrémité 32 du carter externe 30 dont toute rotation est interdite.

Les rouleaux externes 28 viennent chacun en prise directe avec le carter externe 30 et avec le carter interne 18. Le filet 28A de chaque rouleau externe 28 est orienté en sens inverse des filets 18A du carter interne 18 et dans le même sens que les filets du carter externe 30.

Nous allons maintenant présenter le fonctionnement du réducteur 23 selon ce second mode de réalisation. Lorsque le moteur électrique M est actionné selon un premier sens de rotation, les rouleaux internes 14, qui sont en prise directe avec le carter interne 18, sont entraînés en rotation autour de l'axe X de la vis et également en rotation sur eux-mêmes selon leurs axes propres. Ces mouvements de rotation génèrent un déplacement en translation de la cage et des rouleaux selon un mouvement de translation T1 parallèle à l'axe X. Comme les rouleaux internes 14 se déplacent en translation sur la vis 12 qui est fixe, le carter interne 18 et l'arbre du moteur M sont entraînés par les rouleaux internes 14 selon un mouvement de translation T2 parallèle à l'axe X.

Concernant les rouleaux externes 28, ceux-ci sont entraînés en rotation par le carter interne 18, et évoluent selon un mouvement de translation T3 parallèle à l'axe X.

Enfin, la rotation des rouleaux externes 28 entraîne le carter externe selon un mouvement de translation T4 parallèle à l'axe X.

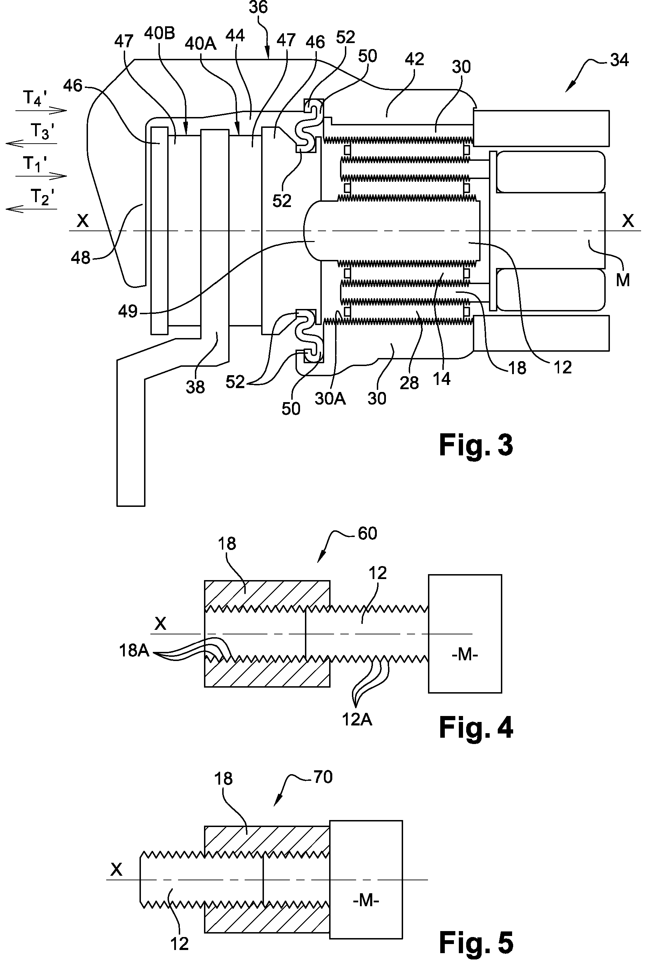

En référence à la figure 3, on va maintenant décrire un troisième mode de réalisation dans lequel, comme dans les précédents modes, le réducteur est un actionneur électromécanique de freinage 34 de véhicule faisant partie intégrante d'un dispositif de freinage 35 de type frein à disque. Un tel dispositif de freinage 35 comprend ledit actionneur 34, un disque de frein 38, des plaquettes de frein 40A, 40B et un étrier flottant 36.

L'étrier flottant 36 comporte une partie d'attache 42, un passage de disque 44 et un mors d'appui 48.

L'extrémité de l'étrier flottant comportant la partie d'attache 42 est rigidement fixée au carter externe 30 du réducteur de l'actionneur 34. L'autre extrémité de l'étrier flottant comporte le mors d'appui 48, lequel s'étend parallèlement au disque 38 et porte une des plaquettes 40B. Entre les deux extrémités de l'étrier flottant 36, le passage de disque 42 forme un logement pour le disque 38 et les plaquettes 40A, 40B.

De manière classique, les plaquettes de freins 40A, 40B sont disposées latéralement, de part et d'autre du disque 38 et comportent chacune un support métallique 46 recouvert d'une garniture 47. On distingue la plaquette de frein intérieure 40A dont le support 46 est rigidement fixé à une extrémité 49 de la vis 12, et la plaquette extérieure 40B dont le support 46 est rigidement fixé au mors d'appui de l'étrier. Un joint d'étanchéité circulaire déformable 50 est disposé autour de la plaquette intérieure et relie un bord de la plaquette de frein intérieure à un bord du carter externe. A cet effet, les plaquettes, l'étrier et le carter comportent chacun un logement 52 adapté pour accueillir des parties d'attache du joint. Ce joint est destiné à isoler l'actionneur de toute pollution extérieure.

L'actionneur 34 comporte un réducteur dit à double étage de réduction de conception sensiblement semblable à celui du second mode de réalisation précédemment décrit. Les éléments constitutifs sont donc agencés comme précédemment, à la différence près que dans ce mode de réalisation la vis 12 est configurée pour translater parallèlement à l'axe X, de telle sorte que la vis forme un piston dont l'extrémité reliée à la plaquette de frein est adaptée pour venir au contact du disque de frein 38. Dans cet exemple, le carter interne 30 entraîné par le moteur est fixe en translation.

On va maintenant décrire le fonctionnement de l'actionneur de freinage 34 utilisé dans le dispositif de freinage 35 ci-dessus.

Lorsque le moteur électrique M est actionné selon un premier sens de rotation, le carter interne 18 entre en rotation. Les rouleaux internes 14, qui sont en prise directe avec le carter interne 18, sont entraînés en rotation autour de leur axe propre et, autour de l'axe X de la vis 12. Ils sont également déplacés selon un mouvement de translation T1' parallèle à l'axe X.

La rotation des rouleaux internes 18 entraine ainsi une translation T2' de la vis 12 selon l'axe X, dans un sens dit positif, de telle sorte que l'extrémité 54 de la vis déplace la plaquette de frein intérieure 40A et pousse celle-ci contre le disque de frein 38 pour générer une partie du freinage du véhicule.

Par ailleurs, la rotation du carter interne 18 entraine les rouleaux externes 28 en rotation autour de leur axe propre et autour de l'axe X. Aussi, les rouleaux externes évoluent selon un mouvement de translation T3' parallèle à l'axe X.

Enfin, la rotation des rouleaux externes 28 entraîne le carter externe 30 selon un mouvement de translation T4' parallèle à l'axe X, dans un sens dit négatif, générant ainsi un déplacement en translation de l'étrier dans le sens négatif. La plaquette externe 40B vient donc en contact avec le disque de frein 38, générant ainsi une autre partie du freinage du véhicule. Le disque 38 est donc pressé entre les deux plaquettes 40A, 40B.

On comprend que lorsque l'arbre du moteur électrique M tourne dans l'autre sens, les mouvements de rotation et de translation décrits ci-avant sont inversés et que les plaquettes de frein translatent parallèlement à l'axe X en s'éloignant du disque de frein.

Dans un quatrième mode de réalisation de l'invention, le réducteur est un actionneur de freinage 60 muni d'un carter 18, d'une vis 12 et d'un moteur E, comme montré à la figure 4. Ici, l'actionneur 60 ne comporte pas de rouleaux tandis que la vis 12 est en prise avec le carter 18 selon une liaison irréversible. Comme précédemment, la vis 12 comporte trois filets 12A et le carter compte six filets 18A. L'arbre du moteur M est directement fixé à la vis, tandis que le carter forme piston de frein. Il est donc adapté pour pourvoir être translaté selon l'axe X de manière à actionner un élément mobile d'un dispositif de freinage.

Selon un cinquième mode de réalisation représenté à la figure 5, l'actionneur 70 comporte un carter 18 rigidement fixé à l'arbre du moteur M tandis que la vis 12 est mobile en translation suivant l'axe X. Ainsi, lorsque le moteur M est activé, la vis forme piston de frein et translate selon l'axe X pour actionner un élément mobile d'un dispositif de freinage.

L'invention n'est pas limitée aux modes de réalisation présentés et d'autres modes de réalisation apparaîtront clairement à l'homme du métier. Il est notamment possible de prévoir, en variante du premier mode de réalisation, que le moteur électrique est relié au carter 18, et que c'est la vis 12 qui est déplacée en translation et fait évoluer l'élément E.

En variante du second mode de réalisation, on peut aussi prévoir que le réducteur comporte un carter externe 30 qui est fixe et que c'est la vis 12 qui est mue en translation en portant l'élément E.

Également, en variante du deuxième ou du troisième mode de réalisation, on peut prévoir que le moteur n'est pas fixé au carter interne, mais qu'il entraîne directement une des deux cages de logement des rouleaux en rotation.

### Nomenclature

10 : réducteur
12 : vis
12A : filets de la vis
14 : rouleaux ; rouleaux internes
14 A : filet d'un rouleau ; filet d'un rouleau interne
16 : cage
18 : carter ; carter interne
18 A : filets du taraudage du carter ; filets du taraudage du carter interne
18 B : filets sur paroi externe du carter interne
20 : extrémité de la vis
21 : logements
22 : extrémité du carter
23 : réducteur dit « à double étage de réduction »
24 : pions de positionnement
26 : alésages
28 : rouleaux externes
28 A : filet d'un rouleau externe
30 : carter externe
30 A : filets du taraudage du carter externe
32 : extrémité du carter externe
34 : actionneur de freinage
35 : dispositif de freinage
36 : étrier flottant
38 : disque de frein
40 : plaquettes de frein
42 : parti d'attache
44 : passage de disque
46 : support
47 : garniture
50 : joint d'étanchéité
52 : logement
54 : extrémité de la vis
60 : actionneur de freinage
70 : actionneur de freinage
T1 : mouvement de translation des rouleaux internes
T2 : mouvement de translation du carter interne
T3 : mouvement de translation des rouleaux externes
T4 : mouvement de translation du carter externe
T1' : mouvement de translation des rouleaux internes
T2' : mouvement de translation de la vis
T3' : mouvement de translation des rouleaux externes
T4' : mouvement de translation du carter externe
E : élément destiné à être déplacé en translation
M : moteur électrique
X : axe de la vis

## Revendications

1. Actionneur de freinage (10 ; 23 ; 34 ; 60 ; 70) de véhicule, comportant :
- une vis (12),
- un carter interne taraudé (18) en prise avec la vis (12) au moyen d'une liaison irréversible,
- un moteur électrique (M) de commande d'un mouvement de la vis (12) par rapport au carter interne (18) ou du carter interne par rapport à la vis de sorte que ce mouvement actionne un élément de freinage (E),
- des rouleaux internes filetés (14), les rouleaux internes (14) étant chacun en prise d'une part avec la vis (12) et d'autre part avec le carter interne (18) ; et
**caractérisé en ce que** les rouleaux internes (14) sont chacun en prise d'une part avec la vis (12) et d'autre part avec le carter interne (18) au moyen d'au moins un filet (14A), et **en ce qu'**il comporte :
- un carter externe taraudé (30), et
- des rouleaux externes (28) en prise chacun d'une part avec le carter interne (18) et d'autre part avec le carter externe (30), les rouleaux externes (28) étant munis d'au moins un filet (28A) orienté en sens inverse d'un filet (18A) du carter interne (18) et dans le même sens qu'un filet (30A) du carter externe (30).

2. Actionneur selon la revendication précédente dans lequel la vis (12) et le carter interne (18) comportent chacun plusieurs filets, de préférence au moins trois filets (12A, 18A).

3. Actionneur selon l'une quelconque des revendications précédentes dans lequel le filet (14A) de chaque rouleau interne (14) est orienté en sens inverse d'un filet (12A) de la vis (12) et dans le même sens qu'un filet (18A) du carter interne.

4. Actionneur selon au moins l'une quelconque des revendications précédentes dans lequel les rouleaux internes (14) sont en prise directe avec la vis (12) et le carter interne (18).

5. Actionneur selon au moins l'une quelconque des revendications précédentes, dans lequel le carter interne (18) forme un piston agencé pour actionner l'élément (E) de freinage.

6. Actionneur selon au moins l'une quelconque des revendications précédentes, dans lequel la vis (12) forme un piston agencé pour actionner l'élément (E) de freinage.

7. Dispositif de freinage de véhicule, comportant un actionneur selon au moins l'une quelconque des revendications précédentes configuré pour actionner un frein à disque, de préférence à étrier flottant.

8. Véhicule muni d'un dispositif de freinage selon la revendication précédente, dans lequel l'actionneur est configuré pour actionner un frein de service ou un frein de parking.

## Patentansprüche

1. Bremsaktuator (10; 23, 34; 60; 70) für Fahrzeug, aufweisend:
- eine Spindel (12),
- ein mit Innengewinde versehenes inneres Gehäuse (18), das mittels einer irreversiblen Verbindung mit der Spindel (12) in Eingriff ist,
- einen Elektromotor (M) zum Steuern einer Bewegung der Spindel (12) relativ zu dem inneren Gehäuse (18) oder des inneren Gehäuses relativ zu der Spindel, so dass diese Bewegung ein Bremselement (E) betätigt,
- mit Außengewinde versehene innere Walzen (14), wobei die inneren Walzen (14) jede einerseits mit der Spindel (12) und andererseits mit dem inneren Gehäuse (18) in Eingriff sind; und
**dadurch gekennzeichnet, dass** die inneren Walzen (14) jede einerseits mit der Spindel (12) und andererseits mit dem inneren Gehäuse (18) mittels mindestens eines Außengewindes (14A) in Eingriff sind und dadurch, dass es Folgendes aufweist:
- ein mit Innengewinde versehenes äußeres Gehäuse (30) und
- äußere Walzen (28), die jede einerseits mit dem inneren Gehäuse (18) und andererseits mit dem äußeren Gehäuse (30) in Eingriff sind, wobei die äußeren Walzen (28) mit mindestens einem Außengewinde (28A) versehen sind, das in umgekehrter Richtung zu einem Außengewinde (18A) des inneres Gehäuses (18) und in der gleichen Richtung wie ein Außengewinde (30A) des äußeren Gehäuses (30) ausgerichtet ist.

2. Aktuator nach dem vorhergehenden Anspruch, wobei die Spindel (12) und das innere Gehäuse (18) jede(s) mehrere Außengewinde aufweisen, vorzugsweise mindestens drei Außengewinde (12A, 18A).

3. Aktuator nach einem der vorhergehenden Ansprüche, wobei das Außengewinde (14A) jeder inneren Walze (14) in umgekehrter Richtung zu einem Außengewinde (12A) der Spindel (12) und in der gleichen Richtung wie ein Außengewinde (18A) des inneren Gehäuses ausgerichtet ist.

4. Aktuator nach mindestens einem der vorhergehenden Ansprüche, wobei die inneren Walzen (14) mit der Spindel (12) und mit dem inneren Gehäuse (18) in direktem Eingriff sind.

5. Aktuator nach mindestens einem der vorhergehenden Ansprüche, wobei das innere Gehäuse (18) einen Kolben bildet, der angeordnet ist, um das Bremselement (E) zu betätigen.

6. Aktuator nach mindestens einem der vorhergehenden Ansprüche, wobei die Spindel (12) einen Kolben bildet, der angeordnet ist, um das Bremselement (E) zu betätigen.

7. Bremsvorrichtung für Fahrzeug, aufweisend einen Aktuator nach mindestens einem der vorhergehenden Ansprüche und eingerichtet, um eine Bremsscheibe zu betätigen, vorzugsweise einen Schwimmsattel.

8. Fahrzeug, das mit einer Bremsvorrichtung nach dem vorhergehenden Anspruch versehen ist, wobei der Aktuator eingerichtet ist, um eine Betriebsbremse oder eine Feststellbremse zu betätigen.

## Claims

1. Vehicle braking actuator (10; 23; 34; 60; 70), comprising:
- a screw (12),
- a tapped inner housing (18) engaged with the screw (12) by means of an irreversible connection,
- an electric motor (M) for controlling a movement of the screw (12) relative to the inner housing (18) or of the inner housing relative to the screw such that this movement actuates a braking element (E),
- threaded inner rollers (14), the inner rollers (14) each being engaged firstly with the screw (12) and secondly with the inner housing (18); and
**characterised in that** the inner rollers (14) are each engaged firstly with the screw (12) and secondly with the inner housing (18) by means of at least one thread (14A) and **in that** it comprises:
- a tapped outer housing (30), and
- outer rollers (28) each engaged firstly with the inner housing (18) and secondly with the outer housing (30), the outer rollers (28) being provided with at least one thread (28A) directed in the opposite direction of a thread (18A) of the inner housing (18) and in the same direction as a thread (30A) of the outer housing (30).

2. Actuator according to the preceding claim, wherein the screw (12) and the inner housing (18) each comprise several threads, preferably at least three threads (12A, 18A).

3. Actuator according to any one of the preceding claims, wherein the thread (14A) of each inner roller (14) is directed in the opposite direction of a thread (12A) of the screw (12) and in the same direction as a thread (18A) of the inner housing.

4. Actuator according to at least any one of the preceding claims, wherein the inner rollers (14) are engaged directly with the screw (12) and the inner housing (18).

5. Actuator according to at least any one of the preceding claims, wherein the inner housing (18) forms a piston designed to actuate the braking element (E).

6. Actuator according to at least any one of the preceding claims, wherein the screw (12) forms a piston designed to actuate the braking element (E).

7. Vehicle braking device, comprising an actuator according to at least any one of the preceding claims configured to actuate a disc brake, preferably with floating calliper.

8. Vehicle provided with a braking device according to the preceding claim, wherein the actuator is configured to actuate a service brake or a parking brake.
